# DEMANDE DE BREVET EUROPEEN

(11) **EP 1 421 848 A1**
(43) Date de publication de la demande: **26.05.2004**
(21) Numéro de dépôt: 03368100.8
(22) Date de dépôt: 20.11.2003
(51) Int. Cl.: A01M 29/00

(54) **Dispositif pour faciliter la mise en place des appareils électriques destinés à repousser les volatiles**

(30) Priorité: 20.11.2002 FR 0214529
(71) Demandeur: Sel Holding, 94120 Fontenay sous Bois (FR)
(72) Inventeur: Negre, Gilles, 60330 Le Plessis Belleville (FR)
(74) Mandataire: Bonneau, Gérard

(57) **Abrégé**

Dispositif de connexion flexible connectant électriquement au moins deux tiges rigides (21 et 22) formant un angle entre elles compris entre 0 et 180 ° d'un appareil électrique pour repousser les volatiles, ce dispositif de connexion étant constitué d'une plaque conductrice (10) percée d'au moins quatre ouvertures (12-1 à 12-4), l'extrémité de la première tige (21) étant insérée dans les deux premières ouvertures consécutives (12-1 et 12-2) et l'extrémité de la deuxième tige (22) étant insérée dans les deux autres ouvertures consécutives (12-3 et 12-4), la plaque (10) étant fléchie selon l'angle entre les tiges de façon à épouser le bord de l'édifice à protéger.

## Description

La présente invention concerne les appareils électriques pour repousser les volatiles afin de protéger les bâtiments ou les lieux fréquentés par le public et concerne en particulier un dispositif pour faciliter la mise en place des appareils destinés à repousser les volatiles.

Les dégradations et les nuisances provoquées par les oiseaux et en particulier par les pigeons sont un véritable problème pour les zones urbanisées. Afin de protéger les bâtiments et le public, de nombreux dispositifs ont vu le jour et en particulier des dispositifs électriques destinées à empêcher les oiseaux de se poser là où le dispositif est mis en place. Ainsi, Il existe de nombreux dispositifs constitués généralement de fils flexibles ou de tiges rigides traversés par un courant de faible ampérage et de haute tension, fixés sur les lieux à protéger par l'intermédiaire de socles. Ces dispositifs peuvent être mis en place sur toutes les parties d'un édifice ou d'un bâtiment et en particulier sur tous les endroits susceptibles de recevoir un pigeon. Dans ce cas, le fil ou la tige conductrice relié à un générateur de courant longe le faîtage, les cornières, les gouttières, entoure les monuments statuaires ou autres.

Dans le cas de dispositifs électriques constitués de tiges rigides, un problème se pose lors de la mise en place des tiges lorsque la tige doit changer de direction ou contourner un coin de l'édifice pour assurer la continuité électrique. Un moyen utilisé dans ce cas peut être de relier les tiges par un ressort à boudin. Ce moyen de liaison assure la continuité électrique entre les deux tiges tout en procurant à l'ensemble une certaine flexibilité afin de suivre les arêtes et les courbes des parties à protéger. Ainsi, les extrémités des tiges sont enfoncées de chaque côté du ressort. Pour cela, Les ressorts à boudin doivent avoir un diamètre intérieur à peu près égal au diamètre de la tige afin que la tige soit maintenue par friction à l'intérieur du ressort. De ce fait, la mise en place des ressorts est parfois difficile, car l'utilisateur doit rentrer en force l'extrémité de la tige dans le ressort ou disposer d'un outil. D'autre part, le ressort à boudin présente l'inconvénient majeur de ne s'ajuster qu'à un seul diamètre de tige et donc n'est pas adaptable à n'importe quel dispositif du marché pour repousser les volatiles. En outre, le ressort à boudin ne permet pas de relier électriquement entre elles trois tiges rigides.

C'est pourquoi le but principal de l'invention est de fournir un dispositif de connexion électrique flexible pour dispositif électrique destiné à repousser les volatiles constitué de tiges rigides formant entre elles un angle compris entre 0 et 180 ° qui soit adaptable à des tiges de différents diamètres ou ayant de différentes sections.

Un deuxième but de l'invention est de fournir un dispositif de connexion électrique flexible pour dispositif électrique destiné à repousser les volatiles qui assure la continuité électrique de trois tiges rigides ensemble.

L'objet de l'invention est donc un dispositif de connexion flexible connectant électriquement au moins deux tiges rigides formant un angle entre elles compris entre 0 et 180 ° d'un dispositif électrique pour repousser les volatiles, ce dispositif de connexion étant constitué d'une plaque conductrice percée d'au moins quatre ouvertures, l'extrémité de la première tige étant insérée dans les deux premières ouvertures consécutives et l'extrémité de la deuxième tige étant insérée dans les deux autres ouvertures consécutives, la plaque étant fléchie selon l'angle entre les tiges de façon à épouser le bord de l'édifice à protéger.

Les buts, objets et caractéristiques de l'invention apparaîtront plus clairement à la lecture de la description qui suit faite en référence aux dessins dans lesquels :
la figure 1a représente une vue de dessus du dispositif de connexion selon l'invention,
la figure 1b représente une vue de côté du dispositif de connexion, illustré sur la figure 1a,
la figure 2 représente le dispositif de connexion illustré sur les figures 1a et 1b installé sur un édifice.
La figure 3a représente une vue de dessus du dispositif de connexion selon un mode de réalisation particulier, et
La figure 3b représente le dispositif de connexion illustré sur la figure 3a installé sur un édifice.

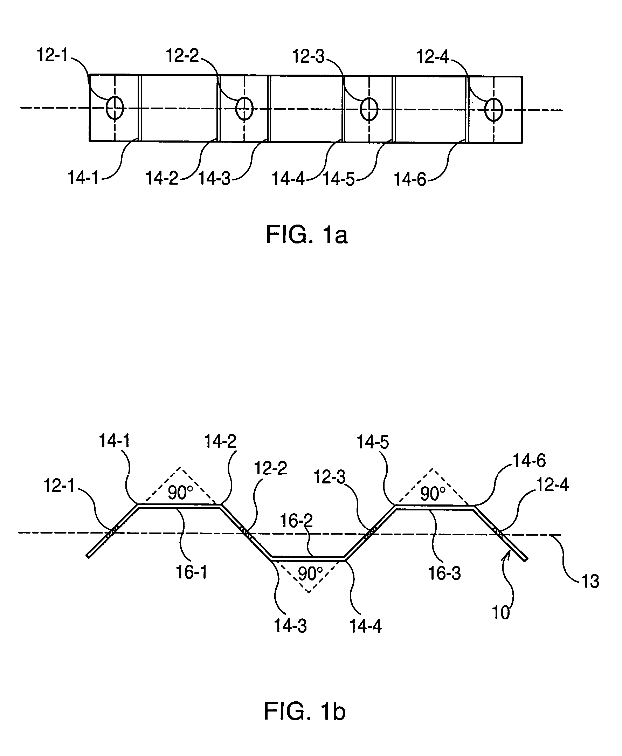

En référence à la figure 1, le dispositif selon l'invention est une plaque rectangulaire 10 d'un matériau conducteur de préférence en inox. Selon un mode de réalisation préféré de l'invention, les dimensions de la plaque sont 48.7 mm de longueur, 6.3 mm de largeur et 3 mm d'épaisseur. La plaque 10 comporte au moins quatre ouvertures 12-1 à 12-4 alignées de préférence le long de la ligne médiane 13 selon la longueur de la plaque. Pour faciliter son emploi, la plaque 10 comporte un certain nombre de pliures 14-1 à 14-6 selon la direction perpendiculaire à la plus grande longueur de la plaque.

Selon la figure 1b qui représente une vue de côté du dispositif selon l'invention, les pliures 14-1 à 14-6 sont disposées de telle façon qu'elles remplissent les conditions suivantes : deux ouvertures 14-1 à 14-4 adjacentes sont placées sur deux plans formant un angle de 90° l'un part rapport à l'autre. La deuxième condition impose le sens de la pliure. En effet, le dispositif selon l'invention se présente de telle façon que les axes de symétrie des ouvertures 12-1 à 12-4 sont sensiblement alignés selon l'axe 13. Etant entendu que cette condition est nécessaire pour éviter d'obtenir une plaque qui s'enroule sur elle-même et qu'elle sous-entend que les axes de symétrie n'ont pas besoin d'être parfaitement alignés pour la bonne mise en oeuvre de l'invention.

D'autre part, il est préférable, pour faciliter la mise en oeuvre de l'invention, que deux plans comportant chacun une ouverture ne soient pas consécutifs mais séparés par un plan et donc séparés par deux arêtes ou pliures. Ainsi, la plaque 10 comporte une succession de plans munis des ouvertures 12-1 à 12-4 séparés par les plans 16-1, 16-2 et 16-3. Selon le mode de réalisation préféré de l'invention et conformément à la figure 1b, les arêtes ou pliures 14-1, et 14-2 sont disposées de telle sorte que les ouvertures 12-1 et 12-2 se situent sur des plans à 90° l'un par rapport à l'autre. De même que les arêtes ou pliures 14-3 et 14-4 sont disposées de telle sorte que les ouvertures 12-2 et 12-3 se situent sur des plans à 90° l'un par rapport à l'autre et que les arêtes ou pliures 14-5 et 14-6 sont disposées de telle sorte que les ouvertures 12-3 et 12-4 se situent sur des plans formant un angle de 90° l'un par rapport à l'autre.

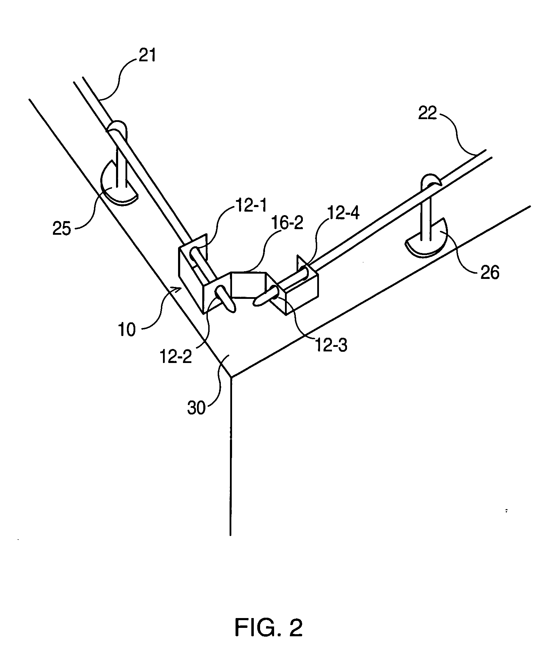

La figure 2 représente une rangée de deux tiges 21 et 22 consécutives et non alignées d'un dispositif électrique pour repousser les volatiles et disposée à l'aide de socles ou plots 25 et 26 sur les arêtes d'un édifice 30 à protéger. Les tiges 21 et 22 sont connectées entre elles par le dispositif de connexion 10 selon l'invention. La première tige 21 est insérée dans les deux premières ouvertures consécutives 12-1 et 12-2 de la plaque 10 et la deuxième tige est insérée dans les deux autres ouvertures consécutives 12-3 et 12-4 de la plaque 10. L'angle désiré entre les tiges 21 et 22 est facilement obtenu en exerçant une légère force sur les deux tiges afin de fléchir la plaque. Selon l'angle désiré et compris entre 0 et 180 ° la plaque se plie davantage selon ces arêtes 14-1 à 14-6 ou/et sur la portion de la partie centrale 16-2. De ce fait, les tiges exercent une pression sur les bords des ouvertures 12-1 à 12-4, ce qui procure un contact intime assurant la connexion électrique ainsi que le blocage du dispositif de connexion 10 sur les tiges 21 et 22.

Le dispositif de connexion selon l'invention présente de nombreux avantages. Il permet de connecter entre elles deux tiges consécutives non alignées d'un dispositif électrique pour repousser les volatiles selon un angle quelconque de par sa souplesse et sa flexibilité.

De plus, il permet de connecter des tiges de différents diamètres ou de section non circulaire. En effet, il suffit que les ouvertures 12-1 à 12-4 aient un diamètre supérieur à la plus grande dimension de la section de la tige. Dans notre mode de réalisation, la tige étant de section circulaire, il suffit que le diamètre des ouvertures soient supérieur au diamètre de la tige. Ensuite, la connexion et le blocage de l'ensemble sont assurés par les pressions qu'exercent les tiges sur les bords des ouvertures lorsque les tiges sont contraintes à épouser l'angle de l'édifice. De ce fait, le dispositif de connexion selon l'invention résiste à l'arrachement.

D'autre part, le dispositif de connexion selon l'invention est mis en place sans forcer et donc ne nécessite pas d'outils. En outre, son démontage et sont remplacement sont également aisés par l'opération inverse.

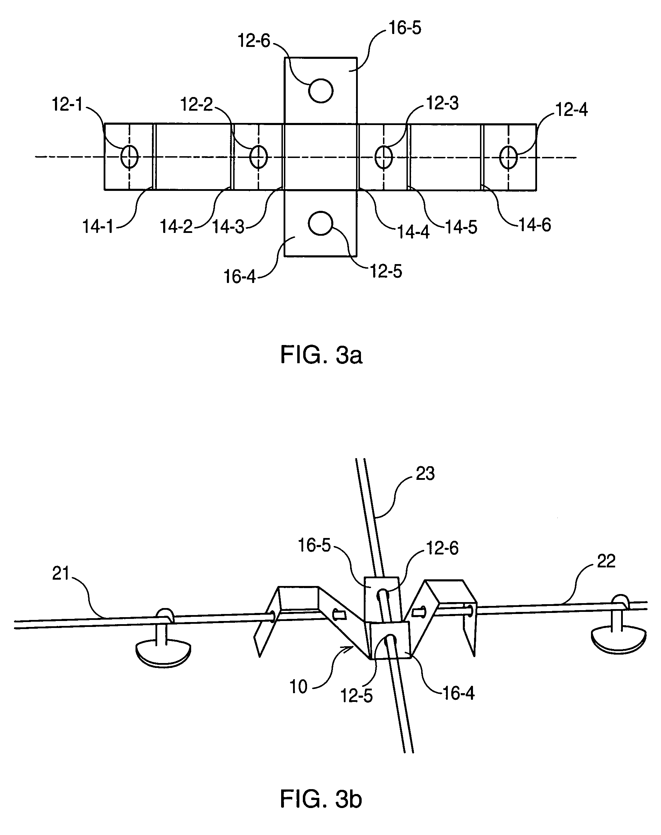

En référence aux figures 3a et 3b représentant un mode de réalisation particulier de l'invention, le plan 16-2 de la plaque 10 peut comporter deux parties supplémentaires 16-4 et 16-5 de préférence rectangulaires situées de chaque côté du plan 16-1 de façon à ce que la plaque 10 forme une croix avec une barre plus courte que l'autre. Chaque partie 16-4 et 16-5 est percée d'une ouverture 12-5 et 12-6 et pliée de façon à ce que les ouvertures 12-5 et 12-6 soient alignées. Une troisième tige 23 est insérée dans les ouvertures 12-5 et 12-6 selon une direction perpendiculaire au plan formé par les tiges 21 et 22. Ainsi, le dispositif de connexion selon l'invention assure la continuité électrique entre les deux tiges 21 et 22 alignées ou pas entre elles et avec une troisième tige 23. Ceci permet d'obtenir une dérivation du circuit formé par la première rangée de tiges 21 et 22 à angle droit avec la première rangée, et également un départ pour un autre plan horizontal que celui où se trouve la première rangée correspondant par exemple à un autre étage du même édifice.

Le dispositif de connexion décrit ici est identique pour les deux rangées parallèles de tiges parallèles constituant un dispositif électrique pour repousser les volatiles, que ce soit dans le mode de réalisation illustré sur les figures 1a, 1b et 2 ou dans le mode de réalisation illustré sur les figures 3a et 3b, une rangée conduisant le courant de phase et l'autre rangée conduisant le courant de terre.

## Revendications

1. Dispositif de connexion flexible connectant électriquement au moins deux tiges rigides (21 et 22) formant un angle entre elles compris entre 0 et 180 ° d'un dispositif électrique pour repousser les volatiles
**caractérisé en ce qu'**il est constitué d'une plaque conductrice (10) percée d'au moins quatre ouvertures (12-1 à 12-4), l'extrémité de la première tige (21) étant insérée dans les deux premières ouvertures consécutives (12-1 et 12-2) et l'extrémité de la deuxième tige (22) étant insérée dans les deux autres ouvertures consécutives (12-3 et 12-4), ladite plaque (10) étant fléchie selon l'angle entre les tiges de façon à épouser le bord de l'édifice à protéger.

2. Dispositif de connexion selon la revendication 1, dans lequel ladite plaque (10) comporte une pluralité de pliures (14-1 à 14-6) de façon à ce que deux desdites ouvertures (12-1 à 12-4) consécutives soient disposées sur des plans perpendiculaires entre eux.

3. Dispositif de connexion selon la revendication 1 ou 2, dans lequel ladite plaque (10) comporte une pluralité de pliures (14-1 à 14-6) de façon à ce que entre deux plans consécutifs comportant chacun une ouverture (12-1 à 12-4) il existe deux pliures entre lesquelles est défini un plan (16-1 à 16-3).

4. Dispositif de connexion selon l'une des revendications 1 à 3, dans lequel lesdites ouvertures (12-1 à 12-4) sont sensiblement alignées.

5. Dispositif de connexion selon l'une des revendications 1 à 4, dans lequel lesdites ouvertures ont un diamètre supérieure au diamètre des tiges (21 et 22) de manière à ce qu'il puisse être utilisé pour des tiges de diamètres différents.

6. Dispositif de connexion selon l'une des revendications 1 à 5, dans lequel ladite plaque (10) comporte deux parties supplémentaires (16-4 et 16-5) de préférence rectangulaire situées de chaque côté de la partie centrale (16-2) percée chacune d'une ouverture (12-5 et 12-6) dans lesquelles une troisième tige (23) vient s'insérer de façon à fournir une dérivation audit dispositif de connexion.
